# EUROPEAN PATENT APPLICATION

(11) **EP 2 781 288 A1**
(43) Date of publication of application: **24.09.2014**
(21) Application number: 14160974.3
(22) Date of filing: 20.03.2014
(51) Int. Cl.: B23D 27/00, B23Q 11/00

(54) **A swarf collection device**

(30) Priority: 20.03.2013 AU 2013201729
(71) Applicant: Nation, Anthony Bernard, Aitkenvale QLD 4810 (AU)
(72) Inventor: Nation, Anthony Bernard, Aitkenvale QLD 4810 (AU)
(74) Representative: Dixon, Philip Matthew

(57) **Abstract**

A swarf collection device for use with a motor driven nibbler, the nibbler including an elongate die holder to which a die is attached and having a longitudinal bore in which a punch reciprocates, the die defining a nibbler gap into which a base material is at least partially received in order to be punched, the swarf collection device including a receptacle with a detachable lid, the lid having a substantially planar upper surface portion and a swarf opening therethrough, the lid attachable to the die holder of the nibbler below the nibbler gap.

## Description

### TECHNICAL FIELD

The present invention relates to swarf collection and in particular to a swarf collection device that can be used with a motor-driven nibbler.

### BACKGROUND ART

Swarf collection devices are conventionally available. It is important to collect swarf created, particularly in instances where the swarf may be created close to electrical connections. Not only is the swarf form from metal unsightly, but if swarf is created and not collected around electrical connections, then the metal swarf can cause electrical arcing or shorting.

Further, if metal swarf is on the ground surface and is walked upon, it typically partially embeds itself into the sole of the shoe or a person's foot which can be painful or cause damage to surfaces which are subsequently walked on.

Some examples of conventionally available collection devices include the chip catcher described in United States Patent No. 3583821 which is formed from a receptacle of a flexible transparent material attached to a drill chuck and surrounding the drillbit forming a sealed enclosure with the surface being drilled. The receptacle has flexible walls such that as the drilling operation proceeds, the flexible walls gradually collapse to allow the drillbit to penetrate deeper into the surface being drilled.

A similar device is described in the United States Patent No. 5653561.

The devices are not particularly well adapted for use with a motor driven nibbler. A nibbler is typically used to cut or pocket cut mild steel, stainless steel, copper and aluminium plates, and particularly corrugated plates.

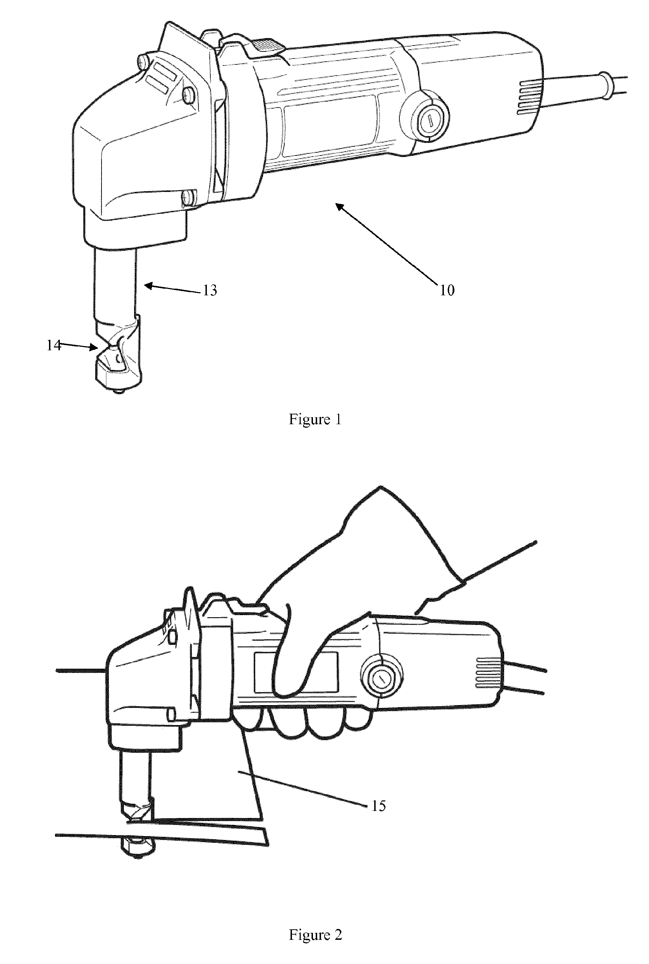

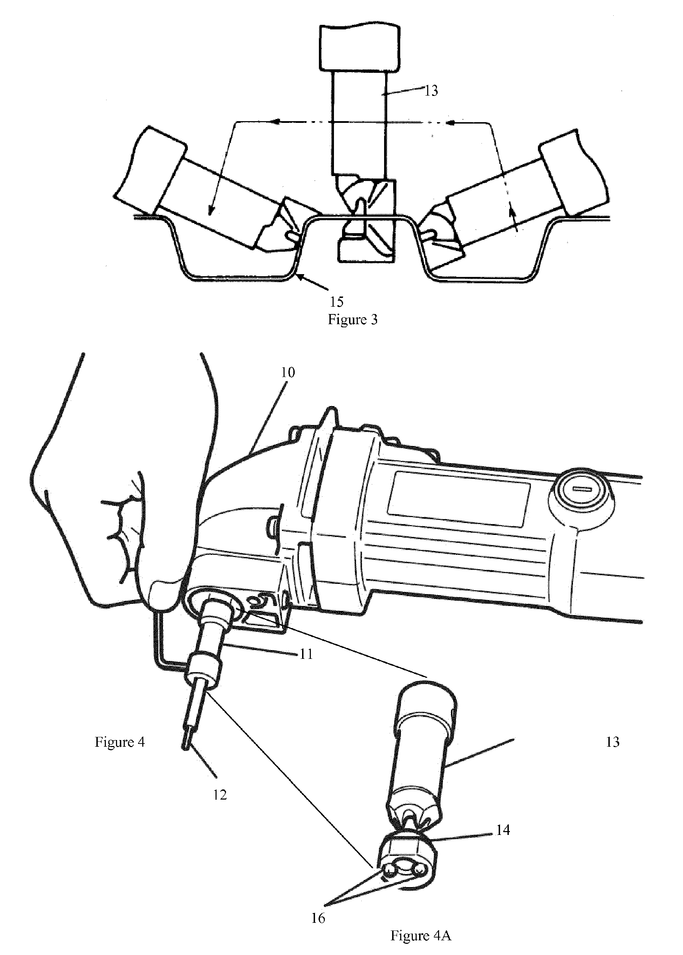

A motor-driven nibbler 10 as illustrated in Figures 1 to 4 typically has a reciprocating piston 11, which reciprocates in a substantially vertical direction. The piston 11 mounts a punch 12. A die holder 13 is a substantially tubular portion is mounted over the piston 11 and the piston 11 is received coaxially within the die holder 13. A die 14, typically being a pair of opposed partially conical portions is provided at the lower end of the die holder 13.

The die 14 typically has a pair of tapered surfaces separated by small nibbler gap into which the base material 15 to be cut is located. The die 14 also has a bore all the way through allowing the punch 12 to reciprocate within the opening. The head of the punch 12 typically reciprocates between a position above the small nibbler gap to a position below the small nibbler gap and has a high rate of reciprocation such that as the nibbler 10 is moved laterally, the punch 12 reciprocates to punch a line of material from the base material 15 to be cut. The bore through the die 14 extends below the level of the base material 15 as well. A pair of machine screws 16 hold the die 14 in place relative to the die holder 13.

A conventional nibbler and method of use is illustrated in Figures 1 to 4. It is quite clear to a person of skill in the art that the swarf collection devices described above cannot be used with a nibbler as illustrated.

Japanese Patent Application No. N005021980 discloses a receptacle for collecting swarf from a nibbler which is attached to a lower end of the die holder. There are two methods of attachment disclosed in this document, the first being a spring bracket over which the opening of the swarf collecting receptacle can be forced through temporary the formation of the side leaves of the spring bracket and the second is a threaded attachment directly to the lower end of the die holder.

Each of these methods lead to their own set of problems with the spring bracket not holding the receptacle particularly closely and thereby allowing material to escape from the receptacle or not properly into the receptacle and the threaded attachment requiring adaptation of the die holder.

It will be clearly understood that, if a prior art publication is referred to herein, this reference does not constitute an admission that the publication forms part of the common general knowledge in the art in Australia or in any other country.

### SUMMARY OF INVENTION

The present invention is directed to a swarf collection device which may at least partially overcome at least one of the abovementioned disadvantages or provide the consumer with a useful or commercial choice.

With the foregoing in view, the present invention in one form, resides broadly in a swarf collection device for use with a motor driven nibbler, the nibbler including an elongate die holder to which a die is attached and having a longitudinal bore in which a punch reciprocates, the die defining a nibbler gap into which a base material is at least partially received in order to be punched, the swarf collection device including a receptacle with a detachable lid, the lid having a substantially planar upper surface portion and a swarf opening therethrough, the lid attachable to the die holder of the nibbler below the nibbler gap.

The swarf collection device of the present invention is particularly adapted to use with a nibbler having an elongate die holder with a die associated with a lower end thereof. The die is normally received laterally into an opening formed in the die holder. Typically, the die holder mounts a die partway along its length and usually, the die holder extends below the die having a substantially planar bottom surface. A pair of machine screws extend upwardly through this bottom surface and partially into the die in order to maintain the die relative to the die holder.

The device of the present invention includes a receptacle adapted to hold the collected swarf produced by the punching action of the nibbler. The receptacle can have any shape or configuration. Preferably, the receptacle will have a generally cylindrical shape.

One particularly preferred form of receptacle has a substantially planar base wall with at least one upstanding, circumferential sidewall. The base wall may be non-planar in some configurations and there may be an advantage to having a basewall which is concave or angled to allow the receptacle to also function as a rest for the nibbler when not in use.

It is further preferred that an external portion be provided on the receptacle to allow a user to more easily grip the receptacle in order to twist the receptacle. There are a variety of methods by which this can be accomplished but one simple method is to provide knurling or similar on an external surface of the receptacle.

It is preferred that the receptacle be closed except for an open top which is adapted to be closed by the detachable lid. It is further preferred that the internal surfaces of the receptacle be substantially smooth in order to allow collected swarf to be emptied easily.

The receptacle will preferably be provided with at least part of an attachment mechanism in order to allow releasable attachment of the receptacle relative to, but preferably directly to the lid. Any type of attachment mechanism can be used although a bayonet mechanism or mount is preferred. Typically, the corresponding portion to that provided on the receptacle, is provided on the lid, in order to attach the receptacle to the lid.

A conventional bayonet mount includes a generally cylindrical male portion with one or more radial pins or tabs, and a female receptor with corresponding, generally L-shaped slot(s). The slots are shaped like a capital letter L; the pin or tab slides into the vertical arm of the L, rotates across the horizontal arm. Preferably, one or more shaped openings are located in a free edge of the at least one sidewall of the receptacle and one or more grooves or similar openings are provided in association with the one or more shaped openings. The grooves typically extend circumferentially into an inner surface of the side wall of the receptacle. This allows the tabs to be aligned with the shaped openings allowing movement of the lid toward the receptacle and then the grooves allow twisting of the receptacle relative to the lid to releasably lock the lid relative to the receptacle.

To couple the two parts, the pin(s) or tab(s) on the male portion are aligned with the slot(s) on the female portion and the two pushed together. Once the pins or tabs reach the bottom of the slot, one or both parts are rotated so that the pins or tabs slide along the horizontal arm of the L-shaped slot. A practised user can connect the two portions quickly and, unlike screw or threaded connectors, they are not subject to cross-threading. To disconnect, the two parts are pushed together slightly while twisting in the opposite direction than for connecting, and then pulling apart.

The mount provided on the lid of the preferred embodiment generally has a number of tabs (often two or three) around the neck portion on the lid, which align with appropriately sized shaped openings in the free edge of the side wall of the receptacle allowing the lid and the receptacle to move laterally together. The tabs can be "keyed" in some way to ensure that the lid is attached in one orientation, often by making one tab a different size. Once inserted, the lid is fastened by turning the receptacle a small amount which moves the tabs into a circumferential groove or grooves in the internal surface of the sidewall.

The strength of the joint comes from the strength of the tabs and the L slots. To disengage unintentionally, the tabs must break or the groove(s) into which the tabs slide must be distorted or torn enough to free the tabs.

The receptacle is typically made of a substantially rigid material although this is not absolutely necessary. A particularly preferred material is a plastic material but other materials could be used such as a light metal for example.

The swarf collection device of the present invention also includes a lid having a substantially planar upper surface portion and a swarf opening therethrough. Normally, the lid is a substantially planar, preferably shaped plate or similar. Typically, the lid has a substantially planar upper/outer surface and a substantially planar underside surface. Typically, an annular outer portion of the substantially planar underside surface will abut an upper edge of the side wall of the receptacle when attached.

Preferably, a portion of the attachment mechanism is associated with the lid, and preferably, with an underside of the lid. According to a particularly preferred embodiment, one or more neck portions extend substantially perpendicularly to the underside of the lid. According to the most preferred form, a single, tubular or annular neck portion is provided, spaced inwardly from the edge of the lid.

According to the bayonet mount configuration outlined above, one or more tabs are located on the one or more neck portions. Typically, each tab extends substantially transversely from the neck portion, typically towards an outer edge of the lid. The preferred tabs are typically substantially parallel to the lid and spaced therefrom. Typically, the tabs are provided at the end of the neck portion opposite the underside of the lid. Still further, it is preferred that each tab radiates outwardly from the neck portion although, not so far as the edge of the lid.

The swarf opening provided in the lid is typically substantially centrally located in order to balance the swarf collection device on the nibbler. The swarf opening will preferably match the dimension of the bore provided in the die and/or the die holder.

Again, the lid is typically made of a substantially rigid material although this is not absolutely necessary. A particularly preferred material is a plastic material but other materials could be used such as a light metal for example.

At least one and typically a number of locking tabs are provided on the lid or receptacle of the device which each corresponds with a locking depression provided on the periphery of the receptacle or on the lid. Preferably, a number of locking tabs are provided with corresponding depressions, each locking tab preferably located adjacent and above (but spaced from) each tab provided on the periphery of the lid.

The lid of the swarf collection device of the present invention is attachable to the die or die holder of the nibbler below the nibbler gap. The attachment can be achieved using any mechanism. However, a particularly preferred mechanism allows attachment of the lid of the swarf collection device to the nibbler using machine screws other than those that are provided for the original purpose of attaching the die to the die holder as these screws are typically too short to properly attach and secure the lid and still secure the die to the die holder. Longer screws of the same gauge and thread should be used.

Typically, at least one and generally a pair of attachment openings is provided through the lid in addition to the swarf opening. Normally, screws or similar threaded fasteners are provided to extend through the attachment opening(s) provided in the lid, from the underside of the lid and into the die holder with an enlarged head portion of each screw or similar threaded fastener abutting an underside of the lid. Preferably, the attachment openings are provided adjacent the preferred central swarf opening but within the preferred tubular or annular neck portion provided on the lid.

The screws or similar threaded fasteners can then be used to clamp the lid directly to the bottom of the die holder. Fixing the lid to the die holder as described will preferably allow movement of the receptacle relative to the lid in order to attach and detach the receptacle.

In use, any swarf created by the punch from the base material will typically fall down the bore provided in the die holder beneath the die and particularly beneath the nibbler gap and through the alignment swarf opening in the lid of the swarf collection device.

Any of the features described herein can be combined in any combination with any one or more of the other features described herein within the scope of the invention.

The reference to any prior art in this specification is not, and should not be taken as an acknowledgement or any form of suggestion that the prior art forms part of the common general knowledge.

### BRIEF DESCRIPTION OF DRAWINGS

Various embodiments of the invention will be described with reference to the following drawings, in which:
Figure 1 is an isometric view of a conventional motor driven nibbler.
Figure 2 is a schematic illustration showing the use of the motor driven nibbler illustrated in Figure 1.
Figure 3 is a schematic illustration of the use of the nibbler illustrated in Figure 1 emphasizing particularly the correct angle of use and movement.
Figure 4 is a schematic illustration of the nibbler illustrated in Figure 1 partially disassembled.
Figure 4A is a detailed view of the portion illustrated in Figure 4.
Figure 5 is a side view of the swarf collection device according to a preferred embodiment of the present invention.
Figure 6 is an axonometric view from above of the device illustrated in Figure 5 with the lid removed from the receptacle.
Figure 6A is an axonometric view of the underside of the lid illustrated in Figure 5.
Figure 7 is an alternate view from above of the device illustrated in Figure 5 with the lid removed from the receptacle.
Figure 7A is an axonometric view of the underside of the lid illustrated in Figure 5.
Figure 8 is a view from above of the lid of the device illustrated Figure 5.
Figure 9 is a plan view from an upper side of a lid for a swarf collection device according to a preferred embodiment of the present invention.
Figure 10 is an axonometric view of the lid illustrated in Figure 9.
Figure 11 is an axonometric view of the lid illustrated in Figure 9 from the underside.
Figure 12 is a detailed view of the central portion of the lid illustrated in Figure 9.
Figure 13 is an axonometric view from the front of a receptacle for a swarf collection device according to a preferred embodiment of the present invention.
Figure 14 is an alternative axonometric view of the receptacle illustrated in Figure 13.
Figure 15 is a detailed view of the lid illustrated in Figure 11.
Figure 16 is a detailed view of the lid illustrated in Figure 10.
Figure 17 is an exploded axonometric view of a swarf collection device according to a preferred embodiment of the present invention.
Figure 18 is a detailed view of the portion of the lid illustrated in Figure 17 and identified by the letter "A".
Figure 19 is a detailed view of the portion of the receptacle illustrated in Figure 17 and identified by the letter "B".
Figure 20 is an axonometric view of the swarf collector illustrated in Figure 17.
Figure 21 is a close-up view of the swarf collector illustrated in Figure 17.

### DESCRIPTION OF EMBODIMENTS

According to a particularly preferred embodiment of the present invention, a swarf collection device 20 for use with a motor driven nibbler is provided.

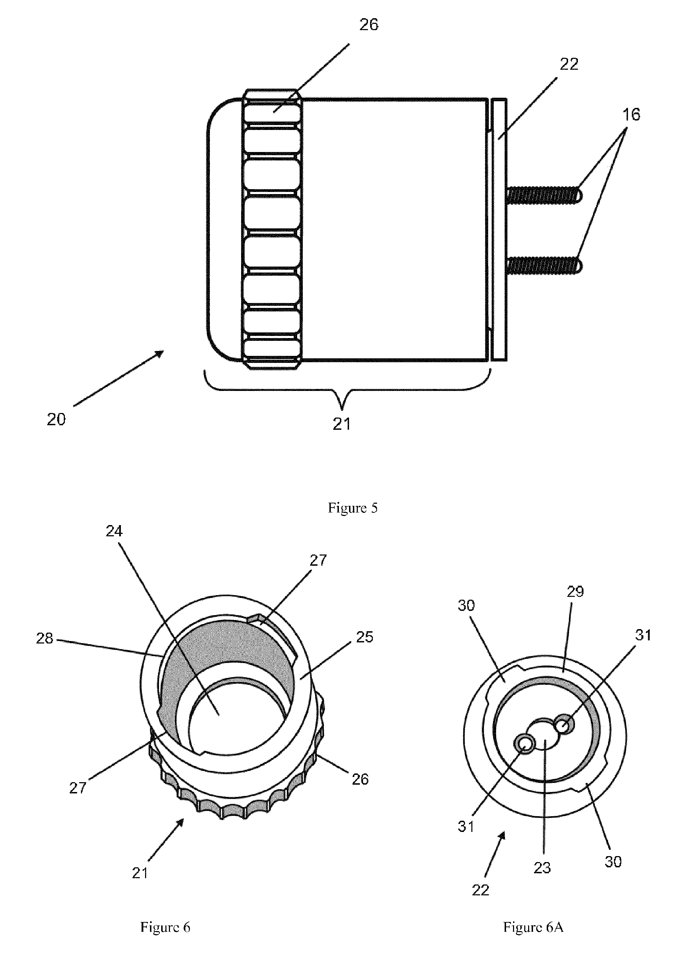

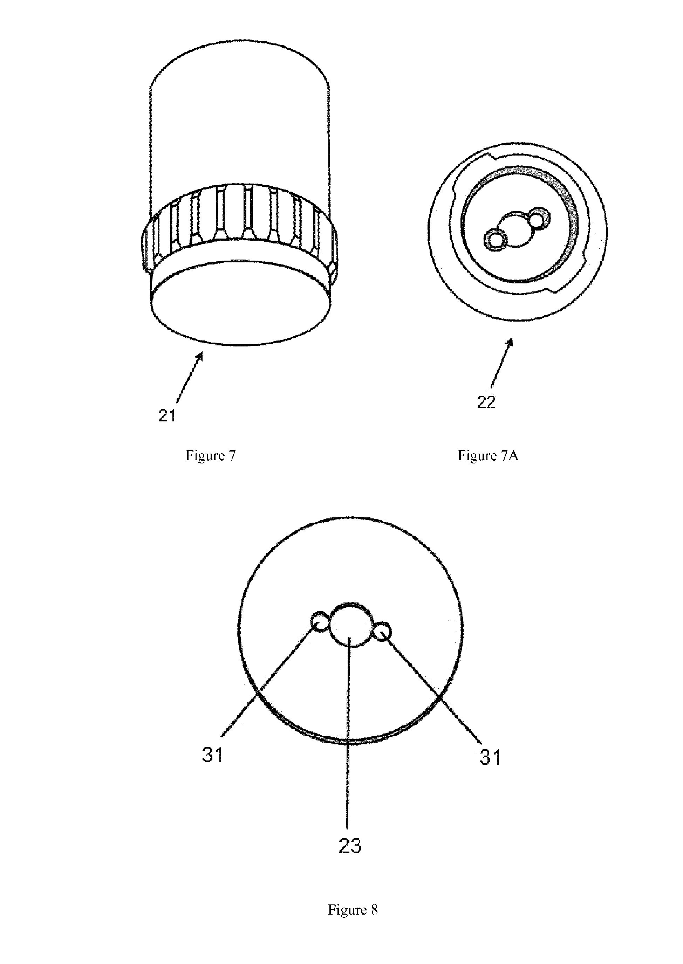

The swarf collection device illustrated in Figures 5 to 8 includes a receptacle 21 with a detachable lid 22, the lid 22 having a substantially planar upper surface portion and a swarf opening 23 therethrough, the lid attachable to the die holder 13 of the nibbler 10 below the nibbler gap.

The swarf collection device of the present invention is particularly adapted to use with a nibbler having an elongate die holder with a die associated with a lower end thereof as illustrated in Figures 1 to 4.

One particularly preferred form of receptacle 21 has a substantially planar base wall 24 with an upstanding, circumferential sidewall 25 resulting in a cylindrical shape.

An external gripping portion 26 is provided on the receptacle 21 to allow a user to more easily grip the receptacle 21 in order to twist the receptacle 21. The receptacle 21 is closed except for an open top which is adapted to be closed by the detachable lid 22.

According to the embodiment illustrated in Figures 5 to 8, the receptacle 21 is provided with a part of a bayonet attachment mechanism in order to allow releasable attachment of the receptacle 21 relative directly to the lid 22. The corresponding part to that provided on the receptacle 21, is provided on the lid 22, in order to attach the receptacle 21 to the lid 22.

The receptacle illustrated includes a female receptor with generally L-shaped slot(s). The slots are shaped like a capital letter L. A pair of shaped openings 27 are located in a free edge of the sidewall 25 of the receptacle 21 and grooves 28 are provided adjacent the shaped openings 27. The grooves 28 extend circumferentially into an inner surface of the sidewall 25 of the receptacle 21.

The receptacle 21 is typically made of a substantially rigid material such as a plastic material.

Normally, the lid 22 is substantially planar, having a substantially planar upper/outer surface and a substantially planar underside surface. An annular outer portion of the substantially planar underside surface will abut an upper edge of the side wall 25 of the receptacle 21 when attached.

Preferably, a corresponding portion of the bayonet mount provided on the receptacle 21 is provided on the underside of the lid 22. According to the illustrated embodiment, a single, tubular or annular neck portion 29 is provided extending substantially perpendicularly to the underside of the lid 22 spaced inwardly from the edge of the lid 22.

According to the bayonet mount configuration outlined above, has a pair of tabs 30 are located on the neck portion 29. As illustrated in Figure 6 in particular, each tab 30 extends substantially transversely from the neck portion 29, towards an outer edge of the lid. The tabs 30 are substantially parallel to the lid 22 and spaced therefrom by the neck portion 29. Still further, each tab 30 radiates outwardly from the neck portion 29 although, not so far as the edge of the lid 22.

This allows the tabs 30 to be aligned with the shaped openings 27 allowing movement of the lid 22 toward the receptacle 21 and then the grooves 28 allow twisting of the receptacle 21 relative to the lid 22 to releasably lock the lid 22 relative to the receptacle 21.

The swarf opening 23 provided in the lid 22 is substantially centrally located in order to balance the swarf collection device on the nibbler and matches the dimension of the bore provided in the die and/or the die holder of the nibbler 10.

The lid 22 of the swarf collection device of the illustrated embodiment is attachable to the die or die holder of the nibbler 10 below the nibbler gap. A particularly preferred mechanism allows attachment of the lid of the swarf collection device to the nibbler 10 using machine screws 16 that are longer than those provided for the original purpose of attaching the die to the die holder, but of the same thread and gauge.

As illustrated, a pair of attachment openings 31 is provided through the lid 22 in addition to the swarf opening 23. The attachment openings 31 are provided adjacent the central swarf opening 23 but within the tubular or annular neck portion 29 provided on the lid 22.

The screws 16 are used to clamp the planar lid 22 directly to the bottom of the die holder. Fixing the lid to the die holder as described allows movement of the receptacle relative to the lid in order to attach and detach the receptacle. Longer screws 16 are used as the original screws are not long enough to accommodate the additional thickness of the lid 22.

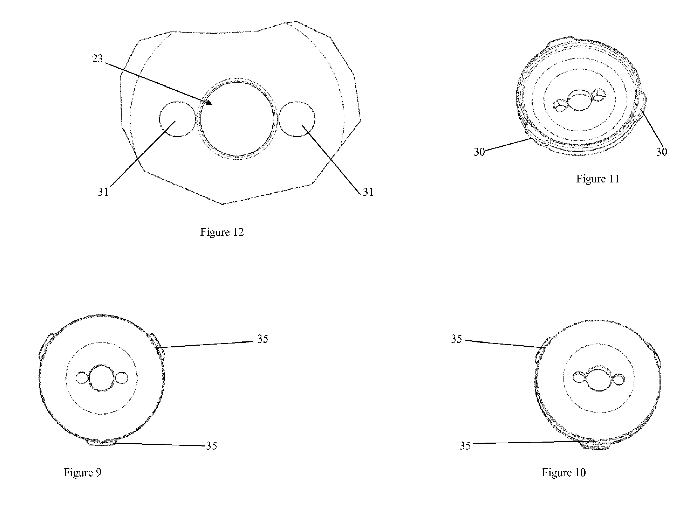

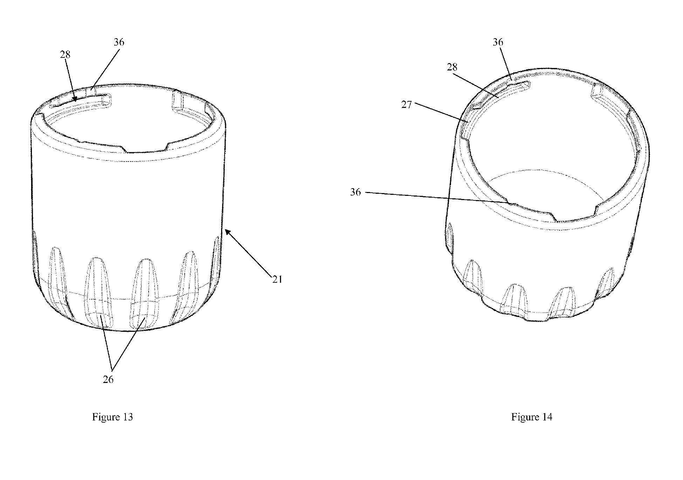

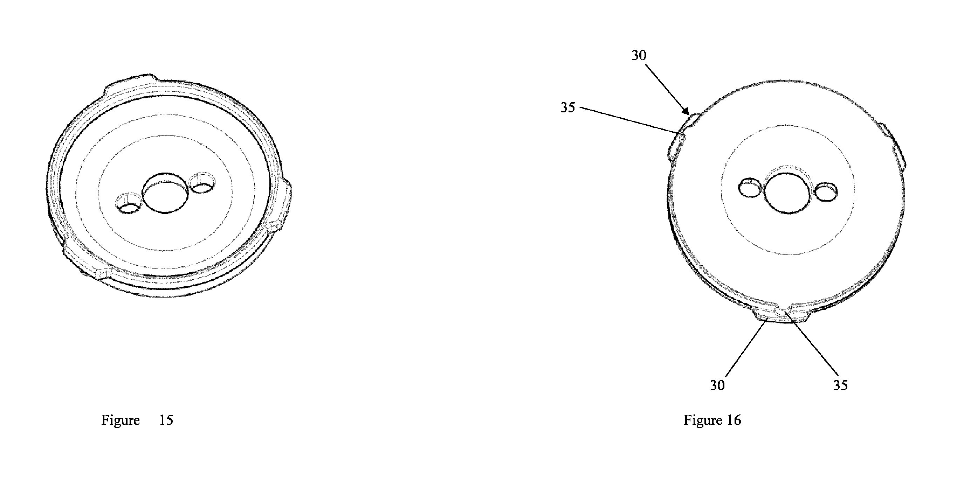

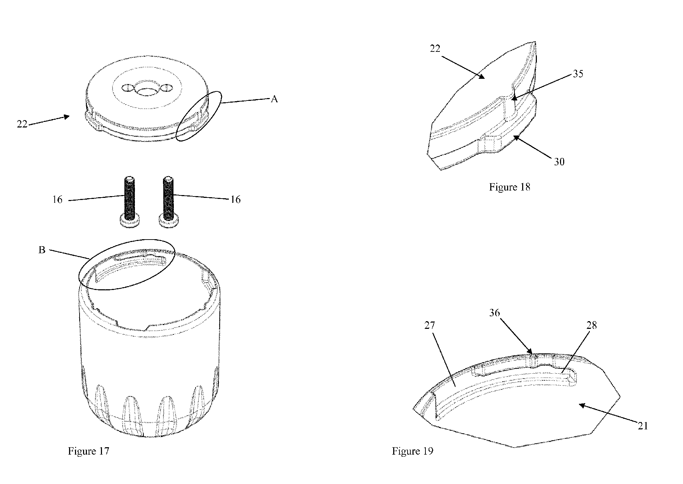

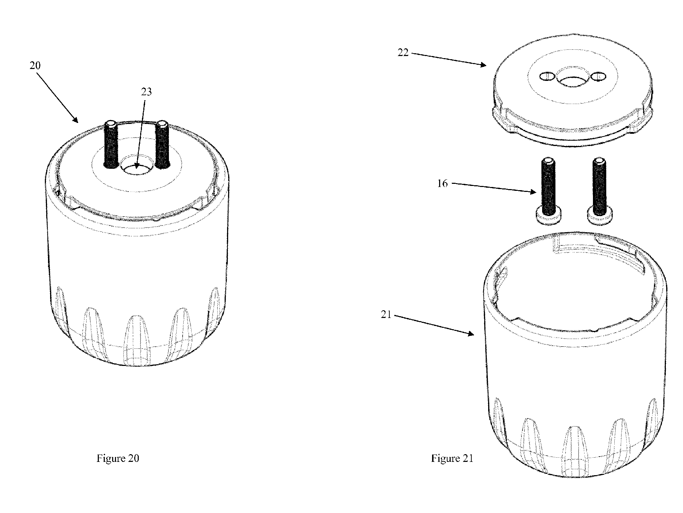

An alternative embodiment of the present invention is illustrated in Figures 9 to 21. This embodiment is similar to the first embodiment in most respects with the most important difference being the provision of a number of locking tabs 35 on the lid 22 of the device which each corresponds with a locking depression 36 on the periphery of the receptacle 21. A locking tab 35 is located adjacent and above (but spaced from) each tab 30 provided on the periphery of the lid 22.

In use, the engagement of the locking tab with the locking depression when the lid is properly positioned on the receptacle, assists with the secure but releasable attachment of the lid and the receptacle. The attachment mechanism used with the tabs on the lid and the particular engagement between the tabs on the lid and the shaped opening and groove on the receptacle, together with the locking tab on the lid and the locking depression on the receptacle result in a robust engagement which is secure but also does not bind together in the presence of the swarf which a threaded connection is wont to do due to the march larger contact area between the threads in a threaded connection.

In use, any swarf created by the punch from the base material will typically fall down the bore provided in the die holder beneath the die and particularly beneath the nibbler gap and through the aligned swarf opening in the lid of the swarf collection device.

In the present specification and claims (if any), the word 'comprising' and its derivatives including 'comprises' and 'comprise' include each of the stated integers but does not exclude the inclusion of one or more further integers.

Reference throughout this specification to 'one embodiment' or 'an embodiment' means that a particular feature, structure, or characteristic described in connection with the embodiment is included in at least one embodiment of the present invention. Thus, the appearance of the phrases 'in one embodiment' or 'in an embodiment' in various places throughout this specification are not necessarily all referring to the same embodiment. Furthermore, the particular features, structures, or characteristics may be combined in any suitable manner in one or more combinations.

In compliance with the statute, the invention has been described in language more or less specific to structural or methodical features. It is to be understood that the invention is not limited to specific features shown or described since the means herein described comprises preferred forms of putting the invention into effect. The invention is, therefore, claimed in any of its forms or modifications within the proper scope of the appended claims (if any) appropriately interpreted by those skilled in the art.

## Claims

1. A swarf collection device for use with a motor driven nibbler, the nibbler including an elongate die holder to which a die is attached and having a longitudinal bore in which a punch reciprocates, the die defining a nibbler gap into which a base material is at least partially received in order to be punched, the swarf collection device including a receptacle with a detachable lid, the lid having a substantially planar upper surface portion and a swarf opening therethrough, the lid attachable to the die holder of the nibbler below the nibbler gap.

2. A swarf collection device as claimed in claim 1 wherein the receptacle has a generally cylindrical shape with a substantially planar base wall and at least one upstanding, circumferential sidewall.

3. A swarf collection device as claimed in claim 1 or claim 2 wherein an external gripping portion is provided on the receptacle to allow a user to more easily grip the receptacle in order to twist the receptacle.

4. A swarf collection device as claimed in any one of the preceding claims wherein the receptacle is provided with at least part of an attachment mechanism in order to allow releasable attachment of the receptacle to the lid.

5. A swarf collection device as claimed in claim 4 wherein a corresponding portion to that provided on the receptacle, is provided on the lid, in order to attach the receptacle to the lid.

6. A swarf collection device as claimed in claim 4 or claim 5 wherein a bayonet attachment mechanism is used.

7. A swarf collection device as claimed in claim 6 wherein the bayonet attachment mechanism includes a generally cylindrical male portion with one or more radial pins or tabs, and a female receptor with a matching number of corresponding, generally L-shaped slots.

8. A swarf collection device as claimed in claim 7 wherein the radial pin or tab slides into a vertical arm of the L-shaped slot and rotates across a horizontal arm the L-shaped slot.

9. A swarf collection device as claimed in any one of claims 4 to 8 wherein one or more L-shaped slots are located in a free edge of at least one sidewall of the receptacle and one or more grooves or similar openings are provided in association with the one or more L-shaped openings, in an interior surface of the at least one sidewall.

10. A swarf collection device as claimed in any one of the preceding claims wherein the lid is a substantially planar plate or similar which corresponds in shape to a cross-sectional shape of the receptacle.

11. A swarf collection device as claimed in claim 10 further including a single, tubular or annular neck portion extending substantially perpendicularly to the underside of the lid spaced inwardly from the edge of the lid.

12. A swarf collection device as claimed in claim 11 wherein one or more tabs are located on the neck portion, each tab extending substantially transversely from the neck portion towards an outer edge of the lid substantially parallel to the lid and spaced therefrom.

13. A swarf collection device as claimed in any one of the preceding claims wherein the swarf opening provided in the lid is substantially centrally located.

14. A swarf collection device as claimed in any one of the preceding claims wherein a pair of attachment openings is provided through the lid in addition to the swarf opening to allow a threaded fastener to extend therethough with an enlarged head of the threaded fastener abutting an underside of the lid.

15. A swarf collection device as claimed in claim 14 wherein the attachment openings are provided adjacent the swarf opening and do not interfere with an attachment mechanism provided on the lid.

16. A swarf collection device as claimed in any one of the preceding claims wherein the lid is fixed to the die holder of the nibbler allowing movement of the receptacle relative to the lid in order to attach and detach the receptacle.
